# EUROPEAN PATENT SPECIFICATION

(11) **EP 4 215 716 B1**
(45) Date of publication and mention of the grant of the patent: **31.07.2024**
(21) Application number: 22152289.9
(22) Date of filing: 19.01.2022
(51) Int. Cl.: E21B 17/042, F16L 15/00

(54) **A THREADED PIPE CONNECTION**
ROHRSCHRAUBVERBINDUNG
RACCORD DE TUYAU FILETÉ

(43) Date of publication of application: 26.07.2023
(73) Proprietor: Tenaris Connections B.V., 1019 GM Amsterdam (NL)
(72) Inventor: ARINA, Juan Manuel, Campana (AR); DURRUTY, Martin, Houston (US); MOLINA, José Daniel, Campana (AR)
(74) Representative: Boult Wade Tennant LLP

(56) References cited:
- WO-A1-2021/011443
- GB-A- 1 224 136
- US-A1- 2019 032 820
- US-A1- 2019 128 075
- US-A1- 2020 025 315

## Description

The present invention relates to a threaded pipe connection. Specifically, the threaded pipe connection is of the type in which a tubular coupling having a box at either end is used to provide a connection between the ends of two pipes, each terminating in a pin that engages a respective box with the terminal ends of the pins abutting in the made-up configuration of the threaded pipe connection. Such pipe connections are known in the field of natural gas and oil extraction.

With connections of the type in which two opposing pins abut within a tubular coupling, the elasticity of the pins results in desired axial compression along with associated radial expansion. However, as discussed below, the inventors have recognised that a problem with such connections is that the pin may also deform radially inwardly at its terminal end. Radially inward deformation may form a limitation for a so-called drift to pass the connection during a quality check. Such limitation may lead to extra operational costs. In particular, the drift may get stuck, wherein the connection can be damaged. In such cases, the connection needs to be pulled from the pipe string, wherein the interior of the connection needs to be repaired or re-machined (in situ) before operations can proceed.

US2019128075A1 describes a threaded coupling comprising a first end, a second end, a first portion of the threaded coupling defining a first thread profile, a second portion of the threaded coupling defining a second thread profile different from the first thread profile, where at least two threads of the second thread profile proximate to the second end are reduced in height according to an extra machining angle.

WO2021011443A1 describes a threaded comprising a coupling member, a first tubular member and a second tubular member, wherein the coupling member has a coupling outer diameter, a first box part with first inner threads, and a second box part with second inner threads, the first tubular member has a first unthreaded tube part, and a first pin part with first outer threads, the second tubular member has a second unthreaded tube part, and a second pin part with second outer threads, the first inner threads and the first outer threads are configured to form a first inner primary seal at final make-up, and the second inner threads and the second outer threads are configured to form a second inner primary seal at final make-up.

GB1224136A describes a connection device for connecting pipe or rod components, especially pipe or rod components used for the construction of braces or ties.

US2019032820A1 describes a pin including, in order from a free end of the pin, a shoulder surface, a first sealing surface, a first male threaded portion, a second sealing surface, and a second male threaded portion. A box includes a shoulder surface, a first sealing surface a first female threaded portion, a second sealing surface, and a second female threaded portion. The first male threaded portion is composed of, in order from near the second sealing surface, an incomplete thread section and a complete thread section. The incomplete thread section has a length of at least three times the thread pitch thereof and has a thread height lower than the thread height of the complete thread section. The incomplete thread section is provided with clearances between crests and roots.

According to the invention, there is provided a threaded pipe connection according to claim 1 that can reduce or avoid some or all of these problems.

The threaded connection comprises a tubular coupling with first and second female threaded zones formed in opposing halves of its internal surface, and first and second pipes.

Preferably, the shoulder surfaces lies on a plane extending perpendicular to the longitudinal axis of the pipes.

The first and second female threaded zones may be formed in opposing ends of the coupling, the ends being sections of the couplings for engagement with the pipes. That is, they may extend from at or near the extreme ends of the tubular coupling to at or near the middle of the coupling.

Each of the pipes comprises a male threaded zone on its external surface and a shoulder surface at its terminal end for abutment with the shoulder surface of another pipe. Each male threaded zone includes a male thread, preferably a trapezoidal thread, that tapers radially so as to reduce in diameter towards the terminal end of the pipe.

The male and female threaded zones may each be defined by the entirety of a thread, or they may be zones of a respective thread. For example, the thread extending through the zone may continue beyond the ends of the zone.

Each female threaded zone includes a female thread, preferably a trapezoidal thread, that tapers radially within the female threaded zone from a maximum diameter at the outer end of the female threaded zone to a minimum diameter at the inner end of the female threaded zone. For each of the female threaded zones, the outer end of the female threaded zone is closer to the end of the coupling than the inner end of the female threaded zone. For each of the female threaded zones, the inner end is opposite the outer end.

As noted above, the preferable thread form for both male and female threads is a trapezoidal thread. As is known in the art, a trapezoidal thread includes a root, a crest, a stabbing flank and a load flank. For a single thread, its root, crest, and flanks extend helically to define turns of the thread about the pipe or within the coupling. In the field, the neighbouring turns of a crest are often referred to as crests because they appear discrete in cross-section. However, the crests are simply spaced apart sections of a single helical crest.

The threaded pipe connection is configured to enable the first and second pipes to be engaged with the coupling in a made-up configuration. In the made-up configuration the shoulder surfaces of the first and second pipes abut and the threaded zones of the pipes engage the threaded zones of the tubular coupling.

In each of the first and second female threaded zones, the crest of one of the male and female threads radially interferes with the root of the other of the male and female threads in a first portion of the female threaded zone. In a second portion of the female threaded zone there is either a clearance, no interference, or less interference than in the first portion. In particular, in the second portion of the female threaded zone there may be either a radial clearance, no radial interference, or less radial interference than in the first portion. In some embodiments, there is no radial interference at all and there may even be a clearance in the second portion.

As is well known to the Skilled Person, radial interference occurs when the male member has a larger radius than the female member into which it is fitted at the point of contact.

That is, in some cases:
- the crest of the male thread radially interferes with the root of female thread in the first portion of the female threaded zone by a greater amount than in the second portion of the female threaded zone; and/or
- the crest of the female thread radially interferes with the root of the male thread in the first portion of the female threaded zone by a greater amount than in the second portion of the female threaded zone.

In some cases:
- the crest of the male thread radially interferes with the root of female thread in the first portion of the female threaded zone and the crest of the male thread does not radially interfere (e.g., there is a clearance) with the root of female thread in the second portion of the female threaded zone; and/or
- the crest of the female thread radially interferes with the root of the male thread in the first portion of the female threaded zone and the crest of the female thread does not radially interfere (e.g., there is a clearance) with the root of male thread in the second portion of the female threaded zone.

Preferably, there is a clearance between the root of the one of the male and female threads and the crest of the other of the male and female threads in the second portion of the female threaded zone.

The second portion is located at the inner end of the respective female threaded zone. The axial length of the second portion of the female threaded zone may be at least 4 turns. The axial length of the second portion of the female threaded zone may be at least 20mm.

By reducing or avoiding interference in the second portion, which is at the inner end of both of the female threaded zones, the interference between the male and female threads is reduced or avoided at the middle of the connection in the region of the engagement between the shoulders of the two pipes.

One way of achieving the reduction in (or avoidance of) interference is by reducing the height of the thread to reduce the force with which the crest radially interferes with the opposing root. For example, the first portion may be a complete portion in which the height of the thread is constant (i.e., there is a fixed radial distance between crest and root); and the second portion may be an incomplete portion in which the height of the thread is less than in the complete portion.

The inventors have recognised that the problem of inward deformation of the terminal ends of the pipes can be reduced, or avoided, by the reduction of (or avoidance of) thread interference in this region.

For example, in each of the first and second female threaded zones, the crest of the male thread may radially interfere with the root of the female thread in the first portion of the female threaded zone by a greater amount than in the second portion of the female threaded zone. In both the first and second portion of each of the first and second female threaded zones, there may be a clearance between the root of the male thread and the crest of the female thread.

In an alternative example, in each of the first and second female threaded zones, the crest of the female thread may radially interfere with the root of the male thread in the first portion of the female threaded zone by a greater amount than in the second portion of the female threaded zone. In both the first and second portion of each of the first and second female threaded zones, there may be a clearance between the crest of the male thread and the root of the female thread.

In preferred embodiments, the first portion is a complete portion in which the height of the female thread (the distance in the radial direction between crest and root) is constant; and the second portion is an incomplete portion in which the height of the female thread is less than in the complete portion. In such embodiments, the crest of the female thread throughout the complete portion of the female threaded zone is arranged to contact the root of the male thread of a male threaded zone.

Although not essential, a preferred way to form the incomplete portion is by forming the crest of the female thread to define a cylindrical surface. The cylindrical surface is therefore at the inner end of each female thread, i.e. the end of the female thread closest to the middle of the connection.

In other words, the crest of the female thread within each female threaded zone may define a cylindrical surface at the inner end of the female threaded zone.

Indeed, the cylindrical surface may be machined in a single operation, either before or after cutting the threads. In that way, the crests of the female threads of both female threaded zones may define a common cylindrical surface at the inner end of the female threaded zone.

The threaded pipe connection set out above, with or without the optional features, preferably involves engagement between the tubular coupling and the pipes only via threaded engagement (e.g., in the threaded zones) when the connection is made-up. Therefore, in contrast to many other connections of this type, in the made-up configuration the first and second pipes do not contact the tubular coupling between the male threaded zones of the first and second pipes. That is, in the made-up configuration the first and second pipes are free from contact with the tubular coupling between the male threaded zones of the first and second pipes.

Although some sealing is achieved via the axial abutment between the pipes, the inventors have realised that further sealing is preferably achieved by the threads. Accordingly, the maximum clearance between the engaged threads is preferably no more than 0.18mm. The clearance is measured between the opposing crests, roots, and flanks of the threads.

The make-up torque required by the connection is achieved by the axial abutment of the ends of the two opposing pipes screwed into the tubular coupling. As a result, there is no need for the tubular coupling to include a shoulder surface. In other words, the tubular coupling may be free of a shoulder surface. In particular, there is no need for the tubular coupling to include a shoulder surface between the first and second female threaded zones for abutment with the pipes.

A threaded pipe connection formed as set out above can advantageously be manufactured more easily than conventional couplings of this type, since there is no need for highly accurate sealing surfaces (often referred to as a metal-to-metal seal) or abutment surfaces to be formed in the tubular coupling. The presence of sealing surface on the pipes and tubular coupling would occupy significant radial and axial extents of the pipe and tubular coupling.

The absence of such a dedicated seal can therefore enable a larger radial extent for the threads or, conversely, a reduction in thickness of the tubular coupling and pipes. Similarly, the absence of such a dedicated seal can enable a larger proportion of the radial dimension of the pipes to be used as shoulders, thus providing additional shouldering torque capacity.

In the axial sense, the absence of the seal can allow the tubular coupling to be shorter, or the threads to occupy a larger proportion of the tubular coupling.

By providing the reduction in height of the female threads towards the inner ends thereof, preferably by forming the crests in the middle region of the tubular coupling so that they collectively define a cylindrical surface, the female threads occupy less space, in particular in the radial direction, around the location of abutment of the first and second pipes, such that there is more room for the first and second pipes.

As mentioned above, the threads are tapered. That is, the female threads each taper within the respective female threaded zone by a first angle relative to the longitudinal axis of the tubular coupling, and each male thread tapers radially within the male threaded zone by a second angle relative to the longitudinal axis of the respective pipe. The reduction in height of the female threads, can accommodate the use of converging thread tapers.

Accordingly, in preferred embodiments, the first angle is greater than the second angle. Since the first angle is greater than the second angle, the threads converge toward the terminal end of the respective pin. In such embodiments, the hoop stresses in the tubular coupling at the outermost ends of the female threaded zones (i.e. towards the terminal ends of the tubular coupling) can be reduced as compared with parallel male and female thread tapers. This is particularly important in some applications, since the hydrocarbons in the environment can make the ends of the tubular coupling brittle. As the first angle is greater than the second angle, hoop stresses at the outermost ends of the female threaded zones can be kept relatively small. As such, the connection can be less susceptible to cracks in the material of the coupling at the outermost ends of the tubular coupling as a result of high hoop stresses. Moreover, incomplete threads can be more prone to galling than complete threads, owing to their smaller flanks and sharper corners, by reducing or eliminating radial interference, such galling problems can be lessened or avoided.

The use of converging tapers allows the taper of the male thread (the second angle) to be reduced. This, in turn, reduces the radial extent of the male threaded zone, which therefore enables the pipe end shoulders to have greater radial dimension (just like the absence of a seal). Such shoulders can therefore withstand greater torque, and so deflect less under compression.

In some applications, it is important for speed and accuracy to improve the stabbing capability of the connection. Also to improve stabbing, the radially outer edge of the shoulder at the ends of the pipes may be bevelled. Optionally, a bevel may be provided on the male and/or female threads where the crest meets the stabbing flank.

The male and female threads may each comprise a crest, a root, a stabbing flank and a load flank. Although various trapezoidal thread forms may be used for the connection described above, a buttress type thread is preferred. At make-up, when the pipe shoulder surfaces abut, the load flanks of male and female threads contact, the crest of a first of the threads contacts the root of the second of the threads, with a clearance between the root of the first thread and the crest of the second thread, and a clearance between stabbing flanks.

For a better understanding of the invention, and to show how the same may be put into effect, reference will now be made, by way of example only, to the accompanying drawings in which:
Figure 1 shows a half-cross-section of a tubular coupling forming part of a first embodiment of a threaded pipe connection in accordance with the invention;
Figure 2 shows a half-cross-section of a first pipe forming part of the first embodiment of a threaded pipe connection in accordance with the invention;
Figure 3a shows the effect of torque on the deflection of pipe ends in a comparative example of the prior art;
Figure 3b shows the effect of torque on deflection of pipe ends in the first embodiment of the present invention; and
Figure 4 shows a cross-section of a preferred thread form for use with the first embodiment.

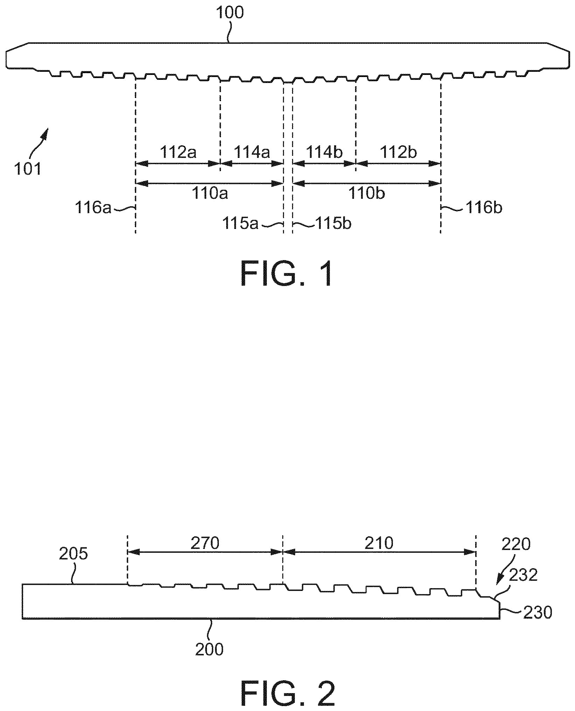

As shown in Figures 1 and 2, a first embodiment of the invention is a first threaded pipe connection comprising a tubular coupling 100 and first and second pipes 200. The second pipe 200 is identical to the first pipe 200.

The tubular coupling 100 is shown in Figure 1. The tubular coupling 100 is a generally tubular body with an internal surface 101. A first female threaded zone 110a is formed in the one half of the internal surface 101 and a second female threaded zone 110b is formed in the opposite half of the internal surface 101. The female threaded zones 110a, 110b each extend from an inner end 115a, 115b to an outer end 116a, 116b. The inner end 115a, 115b of each threaded zone 110a, 110b is that nearest the centre of the tubular coupling 100. The outer end 116a, 116b of each threaded zone 110a, 110b is that nearest the end of the tubular coupling 100 closest to that zone. The first and second female threaded zones 110a, 110b may be zones along respective separate female threads.

As can be seen in Figure 2, the male thread may include a male runout 270 in addition to, or as part of, the male threaded zone 210. Optionally, the female thread may include a runout. The runouts may form part of the threaded zones, or be outside the threaded zones.

Each female threaded zone 110a, 110b includes a trapezoidal female thread (described in more detail below) that tapers radially within the female threaded zone from a maximum diameter at the outer end 116a, 116b of the female threaded zone 110a.

As can be seen from Figure 1, the tubular coupling 100 does not comprise a shoulder surface between the first and second female threaded zones (that is, it is free of shoulder surfaces). In fact, it is preferred that, as shown, the tubular coupling 100 does not include any shoulder surface arranged to abut with one of the pipes 200 (that is, it is free of shoulder surfaces arranged to abut with one of the pipes 200).

Furthermore, the tubular coupling 100 does not comprise any surfaces other than that of the thread designed to seal by interference with surfaces on the pipes 200 (that is, it is free of any surfaces other than that of the thread designed to seal by interference with surfaces on the pipes 200). That is, there is no conventional conical or domed sealing surface on the tubular coupling 100 designed to axially slide over a corresponding conical or domed surface on the pipe 200.

In fact, it is most preferable that, when the pipes 200 are screwed into the tubular coupling 100 in the made-up configuration, the first and second pipes 200 only contact the tubular coupling 100 by engagement of the threads (including the threads of the threaded zones).

One of the first and second pipes 200 is shown in Figure 2. As mentioned above, the second pipe 200 is identical to the first pipe 200, so the figure could be of either of the first or second pipe 200.

The pipe 200 includes a male threaded zone 210 on its external surface. The male threaded zone 210 includes a trapezoidal male thread that tapers radially so as to reduce in diameter towards the terminal end of the pipe 200.

The entire male threaded zone 210 of the first pipe is arranged to engage the entire first female threaded zone 110a. Similarly, the entire male threaded zone 210 of the second pipe 200 is arranged to engage the entire second female threaded zone 110b.

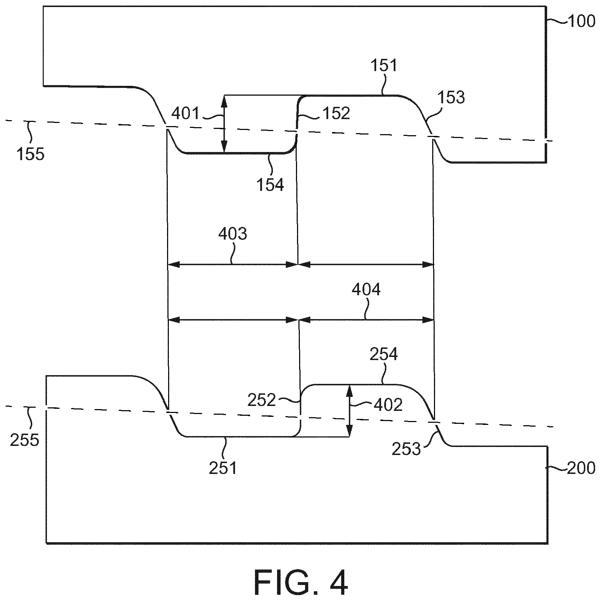

As mentioned above, it is preferred that the male and female threads of the threaded zones 110a, 110b, 200 have trapezoidal thread forms. The preferred thread form for the first embodiment is shown in Figure 4. The female threads comprise a crest 154, a root 151, a stabbing flank 153 and a load flank 152. The male threads comprise a crest 254, a root 251, a stabbing flank 253 and a load flank 252.

The male and female threads preferably have a constant axial width 403, 404 (i.e., the distance between the stabbing flank 153, 253 and load flank 152, 252).

The male and female threads preferably have a pitch of at most 5 turns per inch.

In the made-up configuration (and without being subject to external loads), when the threads are engaged, the load flanks 152, 252 of the male and female threads contact, the crests 154 of the female threads contact the roots 251 of the male thread, a clearance exists between the roots 151 of the female threads and the crests 254 of the male threads, and a clearance exists between the stabbing flanks 153, 253 of the male and female threads.

In the first embodiment, the crests 154, 254 and roots 151, 251 of the threads are parallel to the longitudinal axis of the respective member (the pipes 200 or the tubular coupling 100). This can assist in the stabbing process.

With reference to Figure 4, a thread has a thread height 401, 402. The thread height 401, 402 is the same as the radial extent of the load flank 152, 252 (i.e., the distance in a direction perpendicular to the longitudinal axis of the member, whether it be tubular coupling or pipe).

In the case shown in Figure 4, in which the crests 154, 254 and roots 151, 251 are parallel with the longitudinal axis, this is equivalent to the difference in radius between the crest 154, 254 and the root 151, 251 that is separated by the neighbouring load flank 152, 252 (as opposed to the root that is separated by the neighbouring stabbing flank 153, 253).

Preferably, the male threads have a thread height of no more than 2mm. Also preferably, the female threads have a thread height of no more than 2mm. Most preferably, the male and female threads have a thread height of from 0.7mm to 1.6mm.

Optionally, to assist the stabbing operation, a bevel is provided on the male and/or female threads where the crest 154, 254 meets the stabbing flank 153, 253.

As is known in the art, a notional pitch line 155, 255 may extend through the thread at an arbitrary (but constant for each turn) height. For example, a pitch line 155, 255 may extend through the mid-point of the load flank of each subsequent turn of the thread. The taper of a thread is the angle of that pitch line 155, 255 relative to the longitudinal axis of the respective member (pipe 200, or tubular coupling 100). Taper is defined in the conventional way. However, for the avoidance of doubt, a small taper means that the pitch line 155, 255 is almost parallel with the longitudinal axis (approximating a cylindrical surface), whereas a larger taper would be more flared.

In the first embodiment, the male and female threaded zones preferably have different tapers. The female threaded zone 110a, 110b has a first taper angle. The male threaded zone 210a, 210b of each pipe 200 has a second taper angle. The first angle is greater than the second angle.

As a result of this difference in angles, the threads in the first threaded zone 110a of the tubular coupling 100 and the threads in the threaded zone 210 of the first pipe 200 will tend to converge towards the terminal end of the first pipe.

Similarly, the threads in the second threaded zone 110b of the tubular coupling 100 and the threads in the threaded zone 210 of the second pipe 200 will tend to converge towards the terminal end of the second pipe 200.

Reference to the terminal end in the discussion above, of course, means the terminal end of the pipe 100 in the region of the coupling (that which is inserted into the tubular coupling, as opposed to the far end of the pipe not shown in the Figures).

The pipe 200 includes a shoulder surface 230 at its terminal end. The shoulder surface 230 is arranged for abutment with the shoulder surface 230 of another pipe 200.

The shoulder surface 230 is arranged for abutment with the shoulder surface 230 of another pipe 200. The shoulder surface 230 preferably lies on a plane extending perpendicular to the longitudinal axis of the pipe 200.

Preferably, the pipe 200 includes an unthreaded nose portion 220 leading from the male threaded zone 210 to the shoulder surface 230.

It is preferred that the shoulder 230 (and so the nose 220) has a radial thickness of at least 40% of the nominal wall thickness of the pipe body. This can assist in resisting the axial compression of the pipe end.

Optionally, the radially outer edge of the shoulder surface 230 at the ends of the pipes 200 includes a bevel 232. Bevelling the radially outer edge of the shoulder surface 230 at the ends of the pipes 200, can assist in the stabbing of the pipe 200 into the tubular coupling 100.

In the first embodiment, two pipes 200 may be screwed into a tubular coupling 100 so as to provide a threaded pipe connection in a made-up configuration in which the shoulders 230 of the first and second pipes 200 abut.

In the made up configuration, the entire male threaded zone 210 of the first pipe 200 engages the entire first female threaded zone 110a and the entire male threaded zone 210 of the second pipe 200 engages the entire second female threaded zone 110b.

In the made up configuration, the male and female threaded zones 110a, 110b, 210 engage so as to achieve radial interference. There is therefore a radial force between the tubular couplings 100 and the pipes 200. In the made up configuration, the shoulders 230 of the first and second pipe abut so as to achieve axial interference. The terminal ends of the pipes 200 (the pipe noses 220 in this embodiment) are therefore axially compressed.

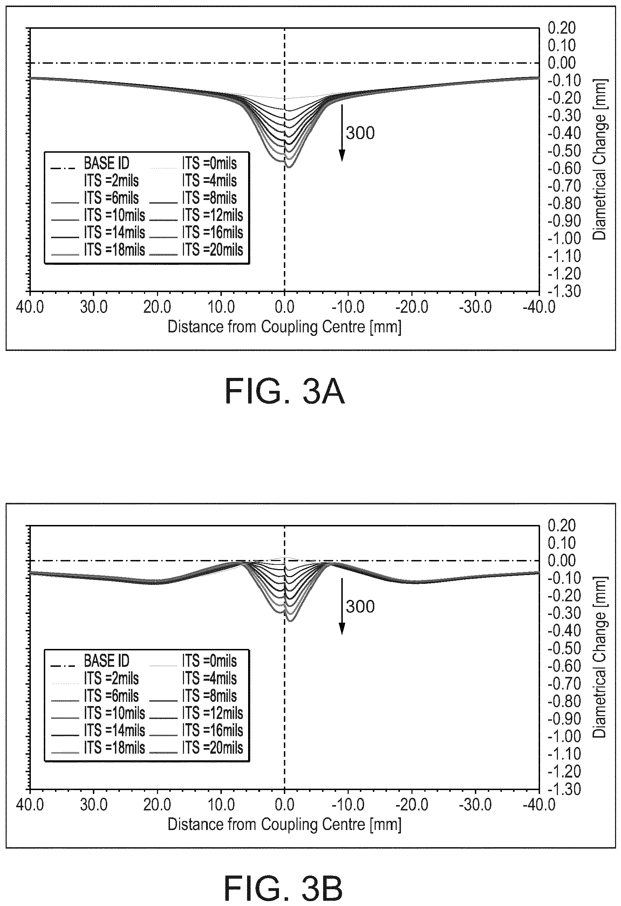

The inventors have found that when the pipes 200 are subjected to such stresses, the terminal end of the pipes 200 can deform radially inwardly. This is shown in Figure 3a, which corresponds to a connection similar to this first embodiment but without a reduction in interference in second portions 114a, 114b of the female threaded zones 110a, 110b (described below). As can be seen in Figure 3a, as ITS increases (as depicted by each subsequent line on the graph in the direction of the arrow 300), the internal diameter of the abutment between the two shoulders 230 reduces. The figure therefore shows the deformation of the pipe noses 220 radially inwardly. As will be appreciated by the Skilled Person, ITS is the axial interference between the shoulder surfaces 203 as a result of torque applied. ITS correlates directly with torque applied starting with ITS=0 which corresponds to the torque required to get the shoulder surfaces to make initial contact.

The inventors have come up with a solution to this problem by reducing, or eliminating, the interference between the male and female threaded zones 110a, 110b, 210 around the location of pipe shoulder 230 abutment.

The first female threaded zone 110a is notionally divided into a first portion 112a and a second portion 114a, with the second portion 114a located at the inner end 115a of the first female threaded zone 110a. In the same way, the second female threaded zone 110b is notionally divided into a first portion 112b and a second portion 114b, with the second portion 114b located at the inner end 115b of the second female threaded zone 110b.

In the first embodiment, the female threads in each of the female threaded zones 110a, 110b are reduced in height in the second portions 114a, 114b as compared with the height of the thread in the first portions 112a, 112b. That is, the first portions 112a, 112b may be "complete" portions, and the second portions 114a, 114b may be "incomplete" portions. As a result, the interference between the crests 154 of the female threads and the roots 251 of the male threads is greater in the first portion 112a, 112b than in the second portion 114a, 114b. In fact, in some embodiments, there is no radial interference at all and there may even be a clearance in the second portion 114a, 114b.

The male threads in the male threaded zones 210a, 210b preferably have a constant height throughout so that the height of the male thread where it engages a first portion 112a, 112b is the same as the height of the male thread where it engages a second portion 114a, 114b.

Moreover, it is preferable that there be no interference between the crests 154 of the female threads and the roots 251 of the male threads in the second portions 114a, 114b. More preferably, there is a clearance between the crests 154 of the female threads and the roots 251 of the male threads in the second portions 114a, 114b.

As a result the hoop stresses in the tubular coupling 100 are not transferred to the same degree via the second portions 114a, 114b to the pipes 200 as they are via the first portions 112a, 112b. With reference to Figure 3b, this can have a significant impact on the amount of deformation of the pipe noses 220 in the made-up configuration. As can be seen in Figure 3b, as make-up torque increases (each subsequent line on the graph in the direction of the arrow 300), the internal diameter at the two shoulders 230 reduces by a much lesser amount than in Figure 3a.

For ease of manufacture, the crest 154 of the female thread within each female threaded zone 110a, 110b may define a cylindrical surface at the inner end 115a, 115b of the female threaded zone 110a, 110b.

As mentioned above, the tubular coupling 100 preferably does not comprise any surfaces other than that of the thread to seal with the pipes 200. In such preferable embodiments, the clearance between the male and female threaded zones is preferably kept small to enable a thread seal to be effective. As discussed, the clearance between the engaged threads exists between the roots 151 of the female threads and the crests 254 of the male threads, and between the stabbing flanks 153, 253 of the male and female threads. The clearance is preferably no more than 0.18mm between the first portion 112a, 112b of each female threaded zone 110a, 110b and the corresponding portion of the male threaded zone 210 engaged therewith.

It is preferred that the connection will be used with a lubricant such as dope to fill the clearance during make up.

A preferred method of manufacturing an embodiment of the threaded pipe connection of the first embodiment involves forming the tubular coupling by: providing a tubular body having an internal surface 101; cutting one or more threads into the internal surface to provide first and second tapered threaded zones 110a, 110b; and forming a cylindrical cut within the tubular body to reduce the height of the thread of an end portion of each the first and second tapered threaded zones 110a, 110b, that end portion being the end of each female threaded zone 110a, 110b nearest the middle (in an axial sense) of the tubular coupling 100. The end portions are at the adjacent axial ends of the female threaded zones.

When formed in this way, the crests 154 of the female thread within each female threaded zone 110a, 110b collectively define a common cylindrical surface at the inner end 115a, 115b of the female threaded zone 110a, 110b.

As will be appreciated, the first embodiment set out above has thread zones that provide reduced interference at the centre of the connection so as to reduce the deformation of the pipe ends under make-up torque. In the first embodiment, the female crest 154 engages the male root 251 and there is a clearance between the female root 151 and the male crest 254. As a result of this configuration, the reduced interference is achieved by reducing the height of the female thread (e.g., at crest 154). In fact, the invention is not limited to a connection in which the female crest 154 engages the male root 251 and there is a clearance between the female root 151 and the male crest 254. In a second embodiment, the male crest 254 engages the female root 151 and there is a clearance between the male root 251 and the female crest 154. In this configuration of the second embodiment, the same reduced interference is achieved at the middle of the connection. However, it is the male thread that is reduced in height at the middle of the connection (see crest 254). Other than this distinction, the remaining features are the same as the first embodiment.

That is, a second embodiment of a threaded pipe connection in accordance with the invention comprises: a tubular coupling 100 with first and second female threaded zones 110a, 110b formed in opposing halves of its internal surface; and first and second pipes 200, each comprising a male threaded zone 210 on its external surface and a shoulder surface 230 at its terminal end for abutment with the shoulder surface 230 of another pipe 200.

Each female threaded zone 110a, 110b includes a trapezoidal female thread that tapers radially within the female threaded zone 110a, 110b from a maximum diameter at the outer end 116a, 116b of the female threaded zone 110a, 110b.

Each male threaded zone 210 includes a trapezoidal male thread that tapers radially so as to reduce in diameter towards the terminal end of the pipe 230.

The threaded pipe connection is configured to enable the first and second pipes 200 to be engaged with the tubular coupling 100 in a made-up configuration in which: the shoulders 230 of the first and second pipes 200 abut; the entire male threaded zone 210 of the first pipe 200 engages the entire first female threaded zone 110a; and the entire male threaded zone 210 of the second pipe 200 engages the entire second female threaded zone 110b.

## Claims

1. A threaded pipe connection comprising:
a tubular coupling (100) with first and second female threaded zones (110a, 110b) formed in opposing sections; and
first and second pipes (200), each comprising a male threaded zone (210) and a
shoulder surface (230) at its terminal end,
wherein each female threaded zone:
extends from an inner end (115a, 115b) to an outer end (116a, 116b), wherein the inner end (115a, 115b) of each threaded zone (110a, 110b) is the end nearest the centre of the tubular coupling (100); and
includes a female thread that tapers radially within the female threaded zone (110a, 110b) from a maximum diameter at the outer end (116a, 116b) of the female threaded zone (110a, 110b),
wherein each male threaded zone (210) includes a male thread that tapers radially so as to reduce in diameter towards the terminal end of the pipe (200),
wherein the threaded pipe connection is configured to enable the first and second pipes (200) to be engaged with the tubular coupling (100) in a made-up configuration in which:
the shoulder surfaces (230) of the first and second pipes (200) abut;
the entire male threaded zone (210) of the first pipe (200) engages the entire first female threaded zone (110a);
the entire male threaded zone (210) of the second pipe (200) engages the entire second female threaded zone (110b); and
for each of the first and second female threaded zones (110a, 110b):
the crest (154, 254) of one of the male and female threads radially interferes with the root (251, 151) of the other of the male and female threads in a first portion (112a) of the female threaded zone (110a, 110b) and does not interfere or interferes by a smaller amount in a second portion (114b) of the female threaded zone (110a, 110b); and
the second portion (114b) is located at the inner end (115a, 115b) of the female threaded zone (110a, 110b).

2. The threaded pipe connection of claim 1, wherein in the made-up configuration in each of the first and second female threaded zones (110a, 110b) the crest (154, 254) of the one of the male and female threads is free from radial interference with the root (251, 151) of the other of the male and female threads in the second portion (114b) of the female threaded zone (110a, 110b).

3. The threaded pipe connection of claim 1 or claim 2, wherein in the second portion (114b)
there is no interference and, optionally, a clearance between the root (151) of the male thread and the crest (254) of the female thread; and/or
there is no interference and, optionally, a clearance between the crest (154) of the male thread and the root (251) of the female thread.

4. The threaded pipe connection of any preceding claim, wherein in the made-up configuration in each of the first and second female threaded zones (110a, 110b) there is a clearance between the root (151, 251) of the one of the male and female threads and the crest (254, 154) of the other of the male and female threads.

5. The threaded pipe connection of claim 4, wherein the axial length of the second portion (112b) of the female threaded zone (110a, 110b) is at least 4 turns, or wherein the axial length of the second portion (114b) of the female threaded zone (110a, 110b) is at least 20mm.

6. The threaded pipe connection of any preceding claim, wherein:
the first portion (112a) is a complete portion in which the height of the female thread is constant; and
the second portion (114b) is an incomplete portion in which the height of the female thread is less than in the complete portion.

7. The threaded pipe connection of claim 6, wherein the crest (254) of the female thread throughout the complete portion of the female threaded zone (110a, 110b) is arranged to contact the root (151) of the male thread of a male threaded zone (210).

8. The threaded pipe connection of any preceding claim, wherein the crest (254) of the female thread within the second portion (114b) of each female threaded zone (110a, 110b) defines a cylindrical surface.

9. The threaded pipe connection of any preceding claim, wherein the crests (254) of the female threads of the second portions (114b) of both female threaded zones (110a, 110b) define a common cylindrical surface.

10. The threaded pipe connection of any preceding claim, wherein the tubular coupling (100) does not comprise a shoulder surface between the first and second female threaded zones (110a, 110b).

11. The threaded pipe connection of any preceding claim, wherein in the made-up configuration the first and second pipes (200) are free from contact with the tubular coupling (100) between the male threaded zones (210) of the first and second pipes (200).

12. The threaded pipe connection of any preceding claim, wherein in the made-up configuration the first and second pipes (200) only contact the tubular coupling (100) via threaded engagement.

13. The threaded pipe connection of any preceding claim, wherein:
the female thread tapers within the female threaded zone (110a, 110b) by a first angle relative to the longitudinal axis of the tubular coupling (100);
each male thread tapers radially within the male threaded zone (210) by a second angle relative to the longitudinal axis of the respective pipe (200); and
the first angle is greater than the second angle such that the tapers converge toward the terminal end of each pipes (200).

14. The threaded pipe connection of any preceding claim, wherein the male threads have a thread height of no more than 2mm.

15. The threaded pipe connection of any preceding claim, wherein the shoulder (230) has a radial thickness of at least 40% of the nominal wall thickness of the pipe body.

16. The threaded pipe connection of any preceding claim, wherein the female threads have a thread height of no more than 2mm.

17. The threaded pipe connection of any preceding claim, wherein the crests (154) and roots (151) of the male threads are parallel to the longitudinal axis of the pipes (200), and the crests (254) and roots (251) of the female threads are parallel to the longitudinal axis of the tubular coupling (100).

18. The threaded pipe connection of any preceding claim, wherein the radially outer edge of the shoulder surface (230) at the ends of the pipes (200) is bevelled.

19. The threaded pipe connection of any preceding claim, wherein a bevel is provided on the male and/or female threads where the crest (154, 254) meets the stabbing flank (153, 253).

20. A method of manufacturing a tubular coupling for a threaded pipe connection, comprising:
providing a tubular coupling (100) having first and second tapered threaded zones (110a, 110b) with adjacent inner end portions (115a, 115b), wherein each tapered threaded zone (110a, 110b) extends from the inner end (115a, 115b) to an outer end (116a, 116b), wherein the inner end (115a, 115b) of each threaded zone (110a, 110b) is the end nearest the centre of the tubular coupling (100); and
reducing the height of the threads of the adjacent inner end portions (115a, 115b) of each the first and second tapered threaded zones (110a, 110b).

21. The method of claim 20, further comprising the step of cutting one or more threads into the internal surface of a tubular body (100) to provide first and second tapered threaded zones (110a, 110b).

22. The method of claim 20 or claim 21, wherein reducing the height of the threads of adjacent end portions (115a, 115b) of each of the first and second tapered threaded zones (110a, 110b) comprises cutting a cylindrical surface within the tubular body (100) to reduce the height of the threads of adjacent end portions (115a, 115b) of each the first and second tapered threaded zones (110a, 110b).

23. The method of any one of claims 20 to 22, further comprising engaging first and second pipes (200) with the tubular coupling (100) to thereby provide the threaded pipe connection of any one of claims 1 to 19.

## Patentansprüche

1. Gewinderohrverbindung, umfassend:
eine Rohrkupplung (100) mit ersten und zweiten Innengewindebereichen (110a, 110b), die in gegenüberliegenden Abschnitten ausgebildet sind; und
einem ersten und einem zweiten Rohr (200), die jeweils einen Außengewindebereich (210) und eine Schulterfläche (230) an ihrem Abschlussende aufweisen,
wobei jeder Innengewindebereich
sich von einem inneren Ende (115a, 115b) zu einem äußeren Ende (116a, 116b) erstreckt, wobei das innere Ende (115a, 115b) jedes Gewindebereichs (110a, 110b) das Ende ist, das der Mitte der Rohrkupplung (100) am nächsten liegt; und
ein Innengewinde umfasst, das sich innerhalb des Innengewindebereichs (110a, 110b) von einem maximalen Durchmesser am äußeren Ende (116a, 116b) des Innengewindebereichs (110a, 110b) aus radial verjüngt,
wobei jeder Außengewindebereich (210) ein Außengewinde aufweist, das sich radial derart verjüngt, dass der Durchmesser zum Ende des Rohrs (200) hin abnimmt,
wobei die Gewinderohrverbindung konfiguriert ist, um zu ermöglichen, dass das erste und das zweite Rohr (200) mit der Rohrkupplung (100) in einer zusammengebauten Konfiguration in Eingriff stehen, in der
die Schulterflächen (230) des ersten und zweiten Rohrs (200) aneinanderstoßen;
der gesamte Außengewindebereich (210) des ersten Rohrs (200) in den gesamten ersten Innengewindebereich (110a) eingreift;
der gesamte Außengewindebereich (210) des zweiten Rohrs (200) in den gesamten zweiten Innengewindebereich (110b) eingreift; und
für sowohl den ersten als auch den zweiten Innengewindebereich (110a, 110b):
der Scheitel (154, 254) eines der Außen- und Innengewinde in einem ersten Abschnitt (112a) des Innengewindebereichs (110a, 110b) mit dem Grund (251, 151) des anderen der Außen- und Innengewinde radial interferiert und in einem zweiten Abschnitt (114b) des Innengewindebereichs (110a, 110b) nicht oder in geringerem Maße in interferiert; und
der zweite Abschnitt (114b) am inneren Ende (115a, 115b) des Innengewindebereichs (110a, 110b) angeordnet ist.

2. Gewinderohrverbindung nach Anspruch 1, bei der in der zusammengebauten Konfiguration sowohl im ersten als auch im zweiten Innengewindebereich (110a, 110b) der Scheitel (154, 254) des einen von Außen- und Innengewinde frei von radialer Interferenz mit dem Grund (251, 151) des anderen von Außen- und Innengewinde im zweiten Abschnitt (114b) des Innengewindebereichs (110a, 110b) ist.

3. Gewinderohrverbindung nach Anspruch 1 oder 2, bei der im zweiten Abschnitt (114b)
keine Interferenz und optional ein Spiel zwischen dem Grund (151) des Außengewindes und dem Scheitel (254) des Innengewindes vorhanden ist; und/oder
keine Interferenz und optional ein Spiel zwischen dem Scheitel (154) des Außengewindes und dem Grund (251) des Innengewindes vorhanden ist.

4. Gewinderohrverbindung nach einem der vorhergehenden Ansprüche, bei der in der zusammengebauten Konfiguration sowohl im ersten als auch im zweiten Innengewindebereich (110a, 110b) ein Spiel zwischen dem Grund (151, 251) des einen von Außengewinde und Innengewinde und dem Scheitel (254, 154) des anderen von Außengewinde und Innengewinde vorhanden ist.

5. Gewinderohrverbindung nach Anspruch 4, bei der die axiale Länge des zweiten Abschnitts (112b) des Innengewindebereichs (110a, 110b) mindestens 4 Windungen beträgt oder bei der die axiale Länge des zweiten Abschnitts (114b) des Innengewindebereichs (110a, 110b) mindestens 20 mm beträgt.

6. Gewinderohrverbindung nach einem der vorhergehenden Ansprüche, bei der:
der erste Abschnitt (112a) ein vollständiger Abschnitt ist, in dem die Höhe des Innengewindes konstant ist; und
der zweite Abschnitt (114b) ein unvollständiger Abschnitt ist, in dem die Höhe des Innengewindes geringer ist als im vollständigen Abschnitt.

7. Gewinderohrverbindung nach Anspruch 6, bei der der Scheitel (254) des Innengewindes über den gesamten vollständigen Abschnitt des Innengewindebereichs (110a, 110b) so angeordnet ist, dass er den Grund (151) des Außengewindes eines Außengewindebereichs (210) berührt.

8. Gewinderohrverbindung nach einem der vorhergehenden Ansprüche, bei der der Scheitel (254) des Innengewindes im zweiten Abschnitt (114b) jedes Innengewindebereichs (110a, 110b) eine zylindrische Fläche definiert.

9. Gewinderohrverbindung nach einem der vorhergehenden Ansprüche, bei der die Scheitel (254) der Innengewinde der zweiten Abschnitte (114b) beider Innengewindebereiche (110a, 110b) eine gemeinsame zylindrische Fläche definieren.

10. Gewinderohrverbindung nach einem der vorhergehenden Ansprüche, bei der die Rohrkupplung (100) zwischen dem ersten und dem zweiten Innengewindebereich (110a, 110b) keine Schulterfläche aufweist.

11. Gewinderohrverbindung nach einem der vorhergehenden Ansprüche, bei der in der zusammengebauten Konfiguration das erste und das zweite Rohr (200zwischen den Außengewindebereichen (210) des ersten und des zweiten Rohrs (200) keinen Kontakt mit der Rohrkupplung (100) haben.

12. Gewinderohrverbindung nach einem der vorhergehenden Ansprüche, bei der in der zusammengebauten Konfiguration das erste und das zweite Rohr (200) die Rohrkupplung (100) nur über einen Gewindeeingriff berühren.

13. Gewinderohrverbindung nach einem der vorhergehenden Ansprüche, bei der
das Innengewinde sich innerhalb des Innengewindebereichs (110a, 110b) relativ zur Längsachse der Rohrkupplung (100) um einen ersten Winkel verjüngt;
jedes Außengewinde sich innerhalb des Außengewindebereichs (210) relativ zur Längsachse des jeweiligen Rohrs (200) um einen zweiten Winkel verjüngt; und
der erste Winkel größer ist als der zweite Winkel, so dass die Verjüngungen zum Abschlussende jedes Rohrs (200) hin konvergieren.

14. Gewinderohrverbindung nach einem der vorhergehenden Ansprüche, bei der die Außengewinde eine Gewindehöhe von nicht mehr als 2 mm aufweisen.

15. Gewinderohrverbindung nach einem der vorhergehenden Ansprüche, bei der die Schulter (230) eine radiale Dicke von mindestens 40 % der nominalen Wanddicke des Rohrkörpers aufweist.

16. Gewinderohrverbindung nach einem der vorhergehenden Ansprüche, bei der die Innengewinde eine Gewindehöhe von nicht mehr als 2 mm aufweisen.

17. Gewinderohrverbindung nach einem der vorhergehenden Ansprüche, bei der die Scheitel (154) und die Gründe (151) der Außengewinde parallel zur Längsachse der Rohre (200) verlaufen und die Scheitel (254) und die Gründe (251) der Innengewinde parallel zur Längsachse der Rohrkupplung (100) verlaufen.

18. Gewinderohrverbindung nach einem der vorhergehenden Ansprüche, bei der die radial äußere Kante der Schulterfläche (230) an den Enden der Rohre (200) abgeschrägt ist.

19. Gewinderohrverbindung nach einem der vorhergehenden Ansprüche, bei der eine Abschrägung an dem Außen- und/oder Innengewinde dort vorgesehen ist, wo der Scheitel (154, 254) auf die Steigungsflanke (153, 253) trifft.

20. Verfahren zur Herstellung einer Rohrkupplung für eine Gewinderohrverbindung, mit den Schritten:
Bereitstellen einer rohrförmigen Kupplung (100) mit ersten und zweiten verjüngten Gewindebereichen (110a, 110b) mit angrenzenden inneren Endabschnitten (115a, 115b), wobei sich jeder verjüngte Gewindebereich (110a, 110b) von dem inneren Ende (115a, 115b) zu einem äußeren Ende (116a, 116b) erstreckt, wobei das innere Ende (115a, 115b) jedes Gewindebereichs (110a, 110b) das Ende ist, das der Mitte der rohrförmigen Kupplung (100) am nächsten liegt; und
die Höhe der Gewinde der benachbarten inneren Endabschnitte (115a, 115b) der ersten und zweiten verjüngten Gewindebereiche (110a, 110b) verringert wird.

21. Verfahren nach Anspruch 20, das ferner den Schritt des Schneidens eines oder mehrerer Gewinde in die Innenfläche eines rohrförmigen Körpers (100) umfasst, um den ersten und den zweiten verjüngten Gewindebereich (110a, 110b) bereitzustellen.

22. Verfahren nach Anspruch 20 oder 21, bei dem das Verringern der Höhe der Gewindegänge benachbarter Endabschnitte (115a, 115b) des ersten und des zweiten verjüngten Gewindebereichs (110a, 110b) das Schneiden einer zylindrischen Fläche innerhalb des rohrförmigen Körpers (100) umfasst, um die Höhe der Gewinde benachbarter Endabschnitte (115a, 115b) des ersten und des zweiten verjüngten Gewindebereichs (110a, 110b) zu verringern.

23. Verfahren nach einem der Ansprüche 20 bis 22, das ferner das Verbinden eines ersten und eines zweiten Rohrs (200) mit der rohrförmigen Kupplung (100) umfasst, um dadurch die Gewinderohrverbindung nach einem der Ansprüche 1 bis 19 bereitzustellen.

## Revendications

1. Raccordement de tuyaux filetés, comprenant :
un raccord tubulaire (100) avec des première et seconde zones filetées femelles (110a, 110b) formées dans des sections opposées ; et
des premier et second tuyaux (200), comprenant chacun une zone filetée mâle (210) et une surface d'épaulement (230) à son extrémité terminale,
dans lequel chaque zone filetée femelle :
s'étend à partir d'une extrémité interne (115a, 115b) jusqu'à une extrémité externe (116a, 116b), dans lequel l'extrémité interne (115a, 115b) de chaque zone filetée (110a, 110b) est l'extrémité la plus proche du centre du raccord tubulaire (100) ; et
comprend un filetage femelle qui se rétrécit radialement à l'intérieur de la zone filetée femelle (110a, 110b) à partir d'un diamètre maximum à l'extrémité extérieure (116a, 116b) de la zone filetée femelle (110a, 110b),
dans lequel chaque zone filetée mâle (210) comprend un filetage mâle qui se rétrécit radialement de manière à réduire en diamètre vers l'extrémité terminale du tuyau (200),
dans lequel le raccord de tuyau fileté est configuré pour permettre aux premier et second tuyaux (200) d'être mis en prise avec le raccord tubulaire (100) dans une configuration composée dans laquelle :
les surfaces d'épaulement (230) des premier et second tuyaux (200) viennent en butée ;
toute la zone filetée mâle (210) du premier tuyau (200) vient en prise avec toute la première zone filetée femelle (110a) ;
toute la zone filetée mâle (210) du second tuyau (200) vient en prise avec toute la seconde zone filetée femelle (110b) ; et
pour chacune des première et seconde zones filetées femelles (110a, 110b) :
le sommet (154, 254) d'un certain des filetages mâle et femelle interfère radialement avec la racine (251, 151) de l'autre des filetages mâle et femelle dans une première partie (112a) de la zone filetée femelle (110a, 110b) et n'interfère pas ou interfère d'une plus petite quantité dans une seconde partie (114b) de la zone filetée femelle (110a, 110b) ; et la seconde partie (114b) est située à l'extrémité intérieure (115a, 115b) de la zone filetée femelle (110a, 110b) .

2. Raccordement de tuyaux filetés selon la revendication 1, dans lequel, dans la configuration composée dans chacune des première et seconde zones filetées femelles (110a, 110b), le sommet (154, 254) du certain des filetages mâle et femelle est exempte d'interférence radiale avec la racine (251, 151) de l'autre des filetages mâle et femelle dans la seconde partie (114b) de la zone filetée femelle (110a, 110b).

3. Raccordement de tuyaux filetés selon la revendication 1 ou la revendication 2, dans lequel dans la seconde partie (114b)
il n'y a pas d'interférence et, facultativement, un jeu entre la racine (151) du filetage mâle et le sommet (254) du filetage femelle ; et/ou
il n'y a pas d'interférence et, facultativement, un jeu entre le sommet (154) du filetage mâle et la racine (251) du filetage femelle.

4. Raccordement de tuyaux filetés selon l'une quelconque des revendications précédentes, dans lequel, dans la configuration composée dans chacune des première et seconde zones filetées femelles (110a, 110b), il existe un jeu entre le pied (151, 251) du des filetages mâle et femelle et le sommet (254, 154) de l'autre des filetages mâle et femelle.

5. Raccordement de tuyaux filetés selon la revendication 4, dans lequel la longueur axiale de la seconde partie (112b) de la zone filetée femelle (110a, 110b) est d'au moins 4 tours, ou dans lequel la longueur axiale de la seconde partie (114b) de la zone filetée femelle (110a, 110b) est d'au moins 20 mm.

6. Raccordement de tuyaux filetés selon l'une quelconque des revendications précédentes, dans lequel :
la première partie (112a) est une partie complète dans laquelle la hauteur du filetage femelle est constante ; et
la seconde partie (114b) est une partie incomplète dans laquelle la hauteur du filetage femelle est inférieure à celle de la partie complète.

7. Raccordement de tuyaux filetés selon la revendication 6, dans lequel le sommet (254) du filetage femelle sur toute la partie complète de la zone filetée femelle (110a, 110b) est agencée pour venir en contact avec la racine (151) du filetage mâle d'une zone filetée mâle (210).

8. Raccordement de tuyaux filetés selon l'une quelconque des revendications précédentes, dans lequel le sommet (254) du filetage femelle à l'intérieur de la seconde partie (114b) de chaque zone filetée femelle (110a, 110b) définit une surface cylindrique.

9. Raccordement de tuyaux filetés selon l'une quelconque des revendications précédentes, dans lequel les sommets (254) des filetages femelles des secondes parties (114b) de chacune des zones filetées femelles (110a, 110b) définissent une surface cylindrique commune.

10. Raccordement de tuyaux filetés selon l'une quelconque des revendications précédentes, dans lequel le raccord tubulaire (100) ne comprend pas de surface d'épaulement entre les première et seconde zones filetées femelles (110a, 110b).

11. Raccordement de tuyaux filetés selon l'une quelconque des revendications précédentes, dans lequel, dans la configuration composée, les premier et second tuyaux (200) sont exempts de contact avec le raccord tubulaire (100) entre les zones filetées mâles (210) des premier et second tuyaux (200).

12. Raccordement de tuyaux filetés selon l'une quelconque des revendications précédentes, dans lequel, dans la configuration composée, les premier et second tuyaux (200) viennent en contact uniquement avec le raccord tubulaire (100) par l'intermédiaire d'une mise en prise filetée.

13. Raccordement de tuyaux filetés selon l'une quelconque des revendications précédentes, dans lequel :
le filetage femelle se rétrécit à l'intérieur de la zone filetée femelle (110a, 110b) d'un premier angle par rapport à l'axe longitudinal du raccord tubulaire (100) ;
chaque filetage mâle se rétrécit radialement à l'intérieur de la zone filetée mâle (210) d'un second angle par rapport à l'axe longitudinal du tuyau respectif (200) ; et
le premier angle est supérieur au second angle de telle sorte que les cônes convergent vers l'extrémité terminale de chaque tuyau (200).

14. Raccordement de tuyaux filetés selon l'une quelconque des revendications précédentes, dans lequel les filetages mâles présentent une hauteur de filetage ne dépassant pas 2 mm.

15. Raccordement de tuyaux filetés selon l'une quelconque des revendications précédentes, dans lequel l'épaulement (230) présente une épaisseur radiale d'au moins 40 % de l'épaisseur de paroi nominale du corps de tuyau.

16. Raccordement de tuyaux filetés selon l'une quelconque des revendications précédentes, dans lequel les filetages femelles présentent une hauteur de filetage ne dépassant pas 2 mm.

17. Raccordement de tuyaux filetés selon l'une quelconque des revendications précédentes, dans lequel les sommets (154) et les racines (151) des filetages mâles sont parallèles à l'axe longitudinal des tuyaux (200), et les sommets (254) et les racines (251) des filetages femelles sont parallèles à l'axe longitudinal du raccord tubulaire (100).

18. Raccordement de tuyaux filetés selon l'une quelconque des revendications précédentes, dans lequel le bord radialement extérieur de la surface d'épaulement (230) aux extrémités des tuyaux (200) est biseauté.

19. Raccordement de tuyaux filetés selon l'une quelconque des revendications précédentes, dans lequel un biseau est prévu sur les filetages mâle et/ou femelle à l'endroit où le sommet (154, 254) rencontre le flanc de guidage (153, 253).

20. Procédé de fabrication d'un raccord tubulaire pour un raccordement de tuyaux filetés, comprenant les étapes consistant à :
fournir un raccord tubulaire (100) présentant des première et seconde zones filetées coniques (110a, 110b) avec des parties d'extrémité internes adjacentes (115a, 115b), dans lequel chaque zone filetée conique (110a, 110b) s'étend à partir de l'extrémité interne (115a, 115b) jusqu'à une extrémité externe (116a, 116b), dans lequel l'extrémité interne (115a, 115b) de chaque zone filetée (110a, 110b) est l'extrémité la plus proche du centre du raccord tubulaire (100) ; et
réduire la hauteur des filetages des parties d'extrémité internes adjacentes (115a, 115b) de chacune des première et seconde zones filetées coniques (110a, 110b).

21. Procédé selon la revendication 20, comprenant en outre l'étape consistant à découper un ou plusieurs filetages dans la surface interne d'un corps tubulaire (100) pour fournir des première et seconde zones filetées coniques (110a, 110b).

22. Procédé selon la revendication 20 ou la revendication 21, dans lequel la réduction de la hauteur des filetages de parties d'extrémité adjacentes (115a, 115b) de chacune des première et seconde zones filetées coniques (110a, 110b) comprend la découpe d'une surface cylindrique à l'intérieur du corps tubulaire (100) pour réduire la hauteur des filetages des parties d'extrémité adjacentes (115a, 115b) de chacune des première et seconde zones filetées coniques (110a, 110b).

23. Procédé selon l'une quelconque des revendications 20 à 22, comprenant en outre la mise en prise de premier et second tuyaux (200) avec le raccord tubulaire (100) pour fournir ainsi le raccord de tuyaux filetés selon l'une quelconque des revendications 1 à 19.
